Europäisches Patentamt

European Patent Office

Office européen des brevets

(19)

(11) Veröffentlichungsnummer : **0 109 535**
**B1**

(12) # EUROPÄISCHE PATENTSCHRIFT

(45) Veröffentlichungstag der Patentschrift :
27.07.88

(51) Int. Cl.⁴ : **A 23 G   3/20**

(21) Anmeldenummer : **83110218.1**

(22) Anmeldetag : **13.10.83**

(54) Vorrichtung zum allseitigen Aufbringen von Granulat auf die Oberfläche eines Körpers.

(30) Priorität : **26.10.82 DE 3239598**

(43) Veröffentlichungstag der Anmeldung :
**30.05.84 Patentblatt 84/22**

(45) Bekanntmachung des Hinweises auf die Patenterteilung : **27.07.88 Patentblatt 88/30**

(84) Benannte Vertragsstaaten :
**BE CH FR IT LI LU**

(56) Entgegenhaltungen :
**GB-A-   712 443**
**GB-A- 1 075 404**
**GB-A- 1 275 580**
**US-A- 2 551 849**
**US-A- 2 590 051**
**US-A- 2 782 754**
**US-A- 3 303 796**

(73) Patentinhaber : **Ferrero oHG**

**D-3570 Stadtallendorf 1 (DE)**

(72) Erfinder : **Rosso, Luigi**
**Ferreroring 5**
**D-3570 Stadtallendorf (DE)**
Erfinder : **Müller, Günter**
**Ferreroring 28**
**D-3570 Stadtallendorf (DE)**

(74) Vertreter : **Lehn, Werner, Dipl.-Ing. et al**
**Hoffmann, Eitle & Partner Patentanwälte Arabellastrasse 4**
**D-8000 München 81 (DE)**

EP 0 109 535 B1

## Beschreibung

Die Erfindung bezieht sich auf eine Vorrichtung zum allseitigen Aufbringen von Granulat auf die Oberfläche eines dreidimensionalen Körpers, insbesondere einer Praline in Kugelform.

Es ist im allgemeinen schwierig, insbesondere auf einer kugelförmigen Praline allseitig möglichst gleichmäßig ein Granulat, wie beispielsweise Nußsplitter, aufzubringen, so daß auch nach aufgebrachtem Granulat die Kugelform beibehalten wird. Wenn man beispielsweise senkrecht in freiem Fall das Granulat auf die Praline streut, wie dies üblicherweise auch von Hand erfolgt, so führt dies zu größeren Anhäufungen auf der oberen Kuppe der kugelförmigen Praline, so daß die kugelförmige Praline nach dem Aufbringen des Granulats eine eiförmige Gestalt annimmt. Außerdem sind in anderen Bereichen der Oberfläche große Zwischenräume zwischen den Granulatsplittern, so daß diese Zwischenräume wieder ausgefüllt werden müssen.

Aus der GB-A-712 443 ist eine Vorrichtung zum zweiseitigen Beschichten einer Praline mit einem flüssigen Beschichtungsmaterial bekannt. Dabei befindet sich oberhalb eines gitterförmigen Endlosförderbandes ein Behälter, aus dem Beschichtungsmaterial mit und entgegen der Förderrichtung auf die Praline gegeben wird, allerdings ohne die Möglichkeit einer allseitigen Beschichtung.

Gemäß der US-A-3 303 796 überlappen das Ende eines oberen Endlosförderbandes und der Anfang eines unteren Endlosförderbandes, um dort die mit z. B. Zuckermasse zu beschichtenden Pralinen zu übergeben, nachdem eine erste Beschichtung auf dem oberen Endlosförderband erfolgte und auf dem unteren. Endlosförderband eine zweite Beschichtung erfolgen soll. Allerdings fallen die Pralinen willkürlich auf das untere Endlosförderband und können daher nur willkürlich über die gesamte Oberfläche beschichtet werden.

Daher liegt der Erfindung die Aufgabe zugrunde, eine Vorrichtung zum gleichmäßigen Aufbringen von Granulat auf die gesamte Oberfläche eines dreidimensionalen Körpers, insbesondere einer Kugel, zu schaffen.

Diese Aufgabe wird erfindungsgemäß gelöst durch eine Vorrichtung zum allseitigen Aufbringen von Granulat auf die Oberfläche eines dreidimensionalen Körpers, insbesondere einer Praline in Kugelform, mit einer oberhalb eines die zu bestreuenden Körper heranführenden Förderers befindlichen Doppelrutsche für das Zuführen des Granulats, deren Ausgänge in entgegengesetzten Richtungen von schräg oben einerseits auf den ankommenden Körper und andererseits auf den weglaufenden Körper gerichtet sind, wobei der Förderer ein Gitterband mit gitterförmigen Aufnahmemulden für die Körper ist und zwei Förderer mit Doppelrutsche so hintereinander geschaltet sind, daß die Körper mit 180° -Wendung von einem Förderer an den nachfolgenden Förderer übergebbar sind.

So erfolgt das Aufbringen des Granulats nacheinander von vier Seiten, so daß keine wesentlichen Anhäufungen auftreten und das Granulat gleichmäßig über die Oberfläche verteilt angebracht ist, insbesondere dann, wenn ein gut haftender Untergrund, wie beispielsweise ein Schokoladenüberzug über einer Waffenkugel, vorhanden ist, in welchen Schokoladenüberzug die Granulatsplitter eingeworfen werden.

Dies bedeutet, daß das Granulat entsprechend dem vorgeschriebenen Verfahren schräg von oben auf den Körper gestreut wird.

Durch die Rutschen kann das Material in gesteuerten Mengen aufgrund seiner Schwerkraft in die gewünschte Richtung herunterrieseln und dann auf den zu bestreuenden Körper fallen.

Der Förderer ist ein Gitterband mit gitterförmigen Aufnahmemulden für die Körper. Dadurch ist der Körper für das Bestreuen mit Granulat weitgehend frei zugänglich.

Durch das Vorsehen von zwei Förderern mit Doppelrutsche so hintereinander, daß die Körper mit einer 180° -Wendung von einem Förderer zu dem nachfolgenden Förderer übergeben werden, ist auf besonders einfache Weise in vier Schritten die gesamte Oberfläche des Körpers mit Granulat zu bestreuen, ohne daß es einerseits Anhäufungen gibt und andererseits Oberflächenbereiche, die nur sehr wenig mit dem Granulat bestreut sind.

In vorteilhafter Weiterbildung der Erfindung befindet sich unterhalb des Förderers für die Körper ein in sich geschlossenes Förderband zum Abführen des nicht auf die Körper aufgebrachten Granulats. Dieses Förderband bewegt sich bevorzugt in derselben Richtung und mit derselben Geschwindigkeit wie der Förderer für die Körper, so daß zwischen Förderer und Förderband keine mahlende Wirkung auftritt, durch die bei Verwendung von beispielsweise Nußsplittern Öl austreten könnte. Dieses austretende Öl würde dazu führen, daß die Praline frühzeitig ranzig wird.

Bevorzugt ist der Förderer ein Endlosförderer und das Förderband ein Endlosförderband, die ineinander geschachtelt sind. Dabei ist der Umlaufweg des Förderers größer als der Umlaufweg des Förderbandes.

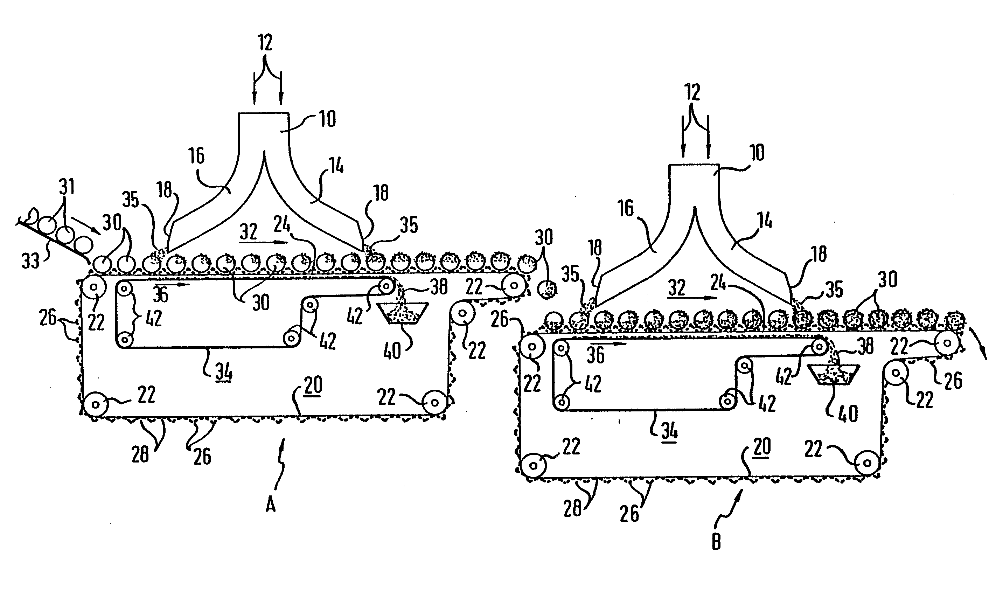

Weitere Einzelheiten, Merkmale und Vorteile der Erfindung ergeben sich aus der nachfolgenden Beschreibung des in der Zeichnung rein schematisch dargestellten Ausführungsbeispiels. Die einzige Figur zeigt in schematischer Ansicht eine Vorrichtung zum Aufbringen eines Granulats auf die Oberfläche einer kugelförmigen Praline.

Die in der einzigen Zeichnung schematisch dargestellte Vorrichtung besteht aus zwei identischen Einheiten A und B, so daß es sich erübrigt, eine Station zu beschreiben. In beiden Stationen werden für die identischen Teile gleiche Bezugszeichen verwendet.

Auf dieser Vorrichtung werden beispielsweise Pralinen behandelt, die eine Kugelform aufweisen und wie folgt zusammengesetzt sind. In einem aus zwei kugelförmigen Waffelhälften zusammengesetzten Grundkörper befindet sich bevorzugt eine Haselnuß mit einer Nougatmasse. Die so gefüllte Waffelkugel wird mit einer Schokoladenmasse überzogen und dann auf diese noch weiche Schokoladenschicht ein Granulat, beispielsweise in Form von Haselnußsplittern, aufgebracht. Dieser letzte Vorgang hinsichtlich des Aufbringens der Haselnußsplitter auf die Oberfläche der kugelförmigen Praline erfolgt mit der nachfolgend zu beschreibenden Vorrichtung.

Die Vorrichtung besteht aus einer Materialrutsche 10, in die die Haselnußsplitter entsprechend den Pfeilen 12 von oben eingegeben werden. Die Rutsche 10 ist als Doppelrutsche ausgebildet, und zwar mit zwei Abzweigungen 14 bzw. 16, von denen jede mit ihrer Mündungsöffnung 18 schräg nach unten gerichtet ist. Unterhalb der Doppelrutsche befindet sich ein Endlosgitterband 20, welches um Umlenkrollen 22 läuft. Der Arbeitstrum 24 befindet sich dabei unmittelbar unterhalb der Doppelrutsche. Das Gitterband bildet durch vorstehende Drahtbügel 26 Mulden 28, in denen jeweils eine kugelförmige Praline 30 liegt. Dabei können quer zur durch den Pfeil 32 angedeuteten Laufrichtung mehrere kugelförmige Pralinen 30 nebeneinander angeordnet sein. Unterhalb des Gitterbandes 20 befindet sich im Bereich der Rutschen 14, 16 ein in sich geschlossenes Endlosförderband 34, welches sich entsprechend dem Pfeil 36 in der gleichen Richtung bewegt wie das Gitterband 20. Dieses Endlosförderband befindet sich dicht unter dem Gitterband und nimmt die Haselnußsplitter 38 auf, die nicht an der Praline haften bleiben und durch das Gitterband hindurchfallen. Diese Haselnußsplitter werden am Ende des Endlosförderbandes 34 in einen Behälter 40 abgegeben. Durch die Bewegung des Gitterbandes 20 und des Endlosförderbandes 34 in gleicher Richtung mit derselben Geschwindigkeit wird ein Zermahlen der Haselnußsplitter zwischen den Bändern vermieden und somit ein dadurch austretendes Öl, welches zu einem frühzeitigen Ranzigwerden der Praline führen könnte. Das Endlosförderband 34 verläuft über Förderwalzen 42.

Das Verfahren zum Bestreuen einer kugelförmigen Praline, so wie sie zuvor beschrieben worden ist, wird nachfolgend erläutert. Die kugelförmigen, mit Granulat noch nicht bestreuten Pralinen 31 fallen von einer Rutsche 33 in die Mulden 28 des als Gitterband 20 ausgebildeten Förderers. Sobald die Pralinen in den Streubereich der ersten Abzweigung 16 der Rutsche gelangen, wird das Granulat 35 der sich bewegenden Praline entgegengestreut, so daß ohne lokale Anhäufungen die obere vordere Hälfte der Kugel mit Nußsplittern versehen wird. Sobald diese Praline in den Streubereich der nachfolgenden Abzweigung 14 gelangt, wird die hintere obere Hälfte mit Haselnußsplittern bestreut. Die so auf der oberen Hälfte mit Haselnußsplittern bestreute Praline fällt mit einer 180° -Drehung am Ende der Station A in die Mulden des Gitterbandes 20 der Station B, wo dann für die zweite Hälfte derselbe Vorgang erfolgt, so daß am Ende der Station B die vollständig mit Haselnußsplittern bestreuten kugelförmigen Pralinen zur Weiterbehandlung abgegeben werden. In einem weiteren Behandlungsschritt kann beispielsweise ein Egalisieren der bestreuten Oberfläche erfolgen.

## Patentansprüche

1. Vorrichtung zum allseitigen Aufbringen von Granulat auf die Oberfläche eines dreidimensionalen Körpers, insbesondere einer Praline in Kugelform, mit einer oberhalb eines die zu bestreuenden Körper heranführenden Förderers (20) befindlichen Doppelrutsche (10, 14 ; 16) für das Zuführen des Granulats (35), deren Ausgänge (18) in entgegengesetzten Richtungen von schräg oben einerseits auf den ankommenden Körper (30) und andererseits auf den weglaufenden Körper (30) gerichtet sind, wobei der Förderer (20) ein Gitterband mit gitterförmigen Aufnahmemulden (28) für die Körper (30) ist und zwei Förderer (20) mit Doppelrutsche (10, 14 ; 16) so hintereinander geschaltet sind, daß die Körper mit 180° -Wendung von einem Förderer an den nachfolgenden Förderer übergebbar sind.

2. Vorrichtung nach Anspruch 1, dadurch gekennzeichnet, daß unterhalb des Förderers (20) für die Körper (30) ein in sich geschlossenes Förderband (34) zum Abführen des nicht auf die Körper (30) aufgebrachten Granulats (38) angeordnet ist.

3. Vorrichtung nach Anspruch 2, dadurch gekennzeichnet, daß das Förderband (34) sich in derselben Richtung und mit derselben Geschwindigkeit bewegt wie der Förderer (20) für die Körper (30).

4. Vorrichtung nach einem der Ansprüche 1 bis 3, dadurch gekennzeichnet, daß der Förderer (20) ein Endlosförderer und das Förderband (34) ein Endlosförderband ist.

## Claims

1. Device for covering all sides of the surface of a three-dimensional object with granules, in particular a praline in spherical form, having a double shute (10, 14 ; 16) for the supply of the granules (35) located above one conveyor (20) for advancing the objects to be coated, exits (18) of said shutes being directed in opposite directions inclined from above on the one side towards the advancing objects (30) and on the other side towards the retreating objects, the conveyor (20) being a latticed belt with lattice formed reception cavities (28) for the objects (30) and two conveyors (20) being so connected one behind each other with the double shoot (10, 14 ; 16) so that the bodies are delivered from one transporter to the following transporter with a 180° turn.

2. Device according to claim 1, characterized in that an endless conveyor (34) is arranged below the conveyor (20) for the objects (30) for removal of the granules (38) which have not been applied to the bodies (30).

3. Device according to claim 2, characterized in that the conveyor (34) moves in the same direction and with the same speed as the conveyor (20) for the objects (30).

4. Device according to any one of the claims 1 to 3, characterized in that the conveyor (20) is an endless conveyor and that the conveyor (34) is an endless conveyor.

## Revendications

1. Dispositif pour déposer des granulés sur l'ensemble de la surface d'un corps tridimensionnel, notamment un bonbon de forme sphérique, et comportant une goulotte double (10, 14 ; 16) située au-dessus d'un convoyeur (20) qui rapproche les corps devant être enrobés, et utilisée pour l'alimentation des granulés (35) et dont les sorties (18) sont dirigées obliquement à partir du haut, dans des directions opposées, d'une part vers les corps (30) qui arrivent, et d'autre part vers les corps (30), qui sont évacués, et dans lequel le convoyeur (20) est formé par une bande en forme de grille comportant des logements (28), en forme de grilles, servant à recevoir les corps (30), et deux convoyeurs (20) munis d'une goulotte double (10, 14. 16) sont montés l'un derrière l'autre de telle sorte que les corps peuvent être transférés, moyennant un retournement sur 180°, d'un convoyeur au suivant.

2. Dispositif selon la revendication 1, caractérisé en ce qu'au-dessous du convoyeur (20) servant à entraîner les corps (30) se trouve disposée une bande convoyeuse (34) fermée sur elle-même et servant à évacuer les granulés (38) non déposés sur les corps (30).

3. Dispositif selon la revendication 2, caractérisé en ce que la bande convoyeuse (34) se déplace dans la même direction et avec la même vitesse que le convoyeur (20) d'entraînement des corps (30).

4. Dispositif selon l'une des revendications 1 à 3, caractérisé en ce que le convoyeur (20) est un convoyeur sans fin et que la bande convoyeuse (34) est une bande convoyeuse sans fin.

0 109 535